# DEMANDE DE BREVET EUROPEEN

(11) **EP 3 864 955 A1**
(43) Date de publication de la demande: **18.08.2021**
(21) Numéro de dépôt: 21156054.5
(22) Date de dépôt: 09.02.2021
(51) Int. Cl.: A01G 3/037

(54) **SÉCATEUR À VENTILATION FORCÉE**

(30) Priorité: 12.02.2020 FR 2001369
(71) Demandeur: Innovation Fabrication Commercialisation Infaco, 81140 Cahuzac-sur-Vère (FR)
(72) Inventeur: GOUT, Christophe, 81150 Castelnau-de-Lévis (FR); PRADEILLES, David, 81600 Montans (FR)
(74) Mandataire: IPAZ

(57) **Abrégé**

L'invention concerne sécateur motorisé électroportatif comprenant un outil de coupe (504) et un moteur électrique (202) pour actionner ledit outil de coupe (504). De plus, le sécateur motorisé électroportatif comprend un ventilateur (302) agencé pour refroidir ledit moteur électrique (202).

## Description

La présente invention concerne un sécateur motorisé électroportatif dont le refroidissement est optimisé.

Le domaine de l'invention est le domaine des sécateurs motorisés électroportatifs.

### État de la technique

Les sécateurs motorisés électroportatifs comprennent un outil de coupe et un moteur électrique pour actionner ledit outil de coupe. Le passage du sécateur manuel au sécateur motorisé électroportatif a permis d'augmenter la productivité de leurs opérateurs tout en réduisant la fatigue générée.

Les sécateurs motorisés ne sont toutefois pas dénués de défauts. Ils sont ainsi souvent enclins à surchauffer, ce qui peut entrainer une gêne pour l'utilisateur.

Pour éviter la chauffe d'un sécateur motorisé, en particulier de son moteur électrique, les sécateurs actuels sont munis de dissipateurs thermiques, comme l'est par exemple le sécateur décrit dans WO 2016083695 A1. Or, l'utilisation d'un dissipateur augmente l'encombrement du sécateur, en particulier un dissipateur passif. De plus, un dissipateur ne permet pas de suffisamment refroidir le moteur d'un sécateur, en particulier lors d'une utilisation prolongée, réduisant ainsi les performances du moteur.

Un but de la présente invention est de remédier à au moins un des inconvénients précités.

Un autre but de la présente invention est de proposer un sécateur mieux refroidis, moins encombrant et plus performant.

### Exposé de l'invention

L'invention permet d'atteindre au moins l'un de ces buts par un sécateur motorisé électroportatif comprenant un outil de coupe et un moteur électrique pour actionner ledit outil de coupe, caractérisé en ce qu'il comprend un ventilateur agencé pour refroidir ledit moteur électrique.

Ainsi, l'invention propose d'équiper un sécateur avec un ventilateur pour refroidir le moteur dudit sécateur, contrairement aux sécateurs connus qui utilisent un moyen de dissipation thermique, en particulier passif. Ainsi, le refroidissement du moteur est réalisé de manière plus efficace et ce en utilisant un ventilateur qui est moins encombrant qu'un moyen de dissipation passif.

Ainsi, le refroidissement du sécateur est amélioré avec un mécanisme moins encombrant et plus performant.

Suivant un mode de réalisation, le sécateur peut être équipé d'un ventilateur muni d'un moteur dédié.

Ce mode de réalisation permet d'obtenir des performances de refroidissement accrues car le moteur dédié au ventilateur peut être dimensionné selon les besoins de refroidissement. De plus, cela permet d'obtenir une architecture plus simple pour le sécateur.

Suivant un autre mode de réalisation, le ventilateur peut être entrainé par le moteur électrique du sécateur dans au moins un sens de rotation.

Autrement dit, dans ce mode de réalisation, le sécateur ne comprend pas de moteur additionnel dédié au ventilateur.

Il est à noter que, en ce qui concerne un sécateur, il était considéré que le fonctionnement du moteur électrique d'actionnement de l'outil de coupe n'était pas compatible avec le fonctionnement usuel d'un ventilateur. En effet un ventilateur fonctionne généralement en rotation continue, sur une longue période de temps et à une vitesse de rotation modérée, de sorte à fournir un refroidissement homogène et limiter le bruit généré. Or, le moteur d'actionnement de l'outil de coupe n'est utilisé que pendant de brefs instants, de l'ordre de 200ms par activation. De plus, le moteur d'actionnement de l'outil de coupe alterne son sens de rotation pour respectivement venir ouvrir et fermer l'outil de coupe. Enfin, le moteur d'actionnement opère à une vitesse de rotation très élevé. Toutes ces spécificités étaient perçues comme incompatibles avec le fonctionnement d'un ventilateur dans un sécateur électrique, de sorte que l'homme du métier était découragé d'utiliser un ventilateur de refroidissement couplé au moteur électrique du sécateur pour le refroidir.

Contrairement à cette idée reçue, de manière surprenante, les inventeurs ont découvert que l'utilisation, dans un sécateur, d'un ventilateur entrainé par le moteur d'actionnement de l'outil de coupe, permet d'obtenir un refroidissement satisfaisant.

Ainsi, l'invention propose un sécateur dans lequel le ventilateur de refroidissement est entrainé par le moteur électrique prévu pour actionner l'outil de coupe, permettant ainsi d'éviter d'utilisation d'un moteur dédié au ventilateur. Le fait de ne pas utiliser un moteur supplémentaire dédié au ventilateur permet d'obtenir un mécanisme de refroidissement plus simple, moins coûteux, moins encombrant et plus performant.

De plus, l'invention permet de réduire la chauffe du sécateur et ainsi d'améliorer le confort d'utilisation, en évitant d'utiliser un moteur dédié au refroidissement.

Le fait de ne pas avoir un moteur dédié au refroidissement permet de réduire la taille du sécateur et son poids, et donc d'améliorer sa préhension.

Suivant un mode de réalisation, le moteur peut entrainer le ventilateur dans un unique sens de rotation.

Suivant un mode de réalisation, le ventilateur peut être entrainé par le moteur électrique dans les deux sens de rotation.

Ainsi, le ventilateur est entrainé en rotation dans les deux sens de rotation, ce qui permet de changer le sens du flux d'air qu'il génère en fonction du sens de rotation dans le lequel il est entrainé. Il est donc possible pour le ventilateur de ventiler dans les deux sens. Cela permet notamment d'optimiser la ventilation du mécanisme de refroidissement. En effet le ventilateur est entrainé à chaque actionnement du moteur, dans un sens comme dans l'autre.

Le flux d'air généré par le ventilateur selon cette aspect de l'invention permet par exemple de refroidir le moteur de sorte à obtenir un gain de performance de l'ordre de 30%.

Avantageusement, le ventilateur peut être solidaire en rotation d'un arbre moteur du moteur électrique, de sorte qu'il s'arrête lorsque ledit arbre moteur s'arrête.

Cet aspect de l'invention permet de réduire le bruit généré par le mécanisme de refroidissement, et plus particulièrement le ventilateur. En effet le bruit généré par le ventilateur est limité aux brèves activations du moteur.

Cette caractéristique permet aussi de simplifier l'architecture du sécateur, notamment pour monter le ventilateur sur l'arbre moteur, sans avoir à prévoir d'éléments additionnels.

Alternativement, dans au moins un sens de rotation du moteur électrique, le ventilateur peut être en roue libre. Dans ce cas, lorsque le moteur s'arrête le ventilateur continue de tourner pendant une durée non nulle après l'arrêt du moteur.

Lorsque le ventilateur n'est entrainé par le moteur que dans un sens de rotation, alors le ventilateur peut être en roue libre dans ce sens de rotation, et/ou dans le sens de rotation inverse, grâce à l'énergie cinétique emmagasinée pendant la phase d'entrainement du moteur.

Par exemple, le ventilateur est ainsi entrainé par le moteur dans un premier sens de rotation lors de la fermeture de l'outil de coupe puis en roue libre lors de l'ouverture de l'outil de coupe. Le ventilateur peut selon un autre exemple être en roue libre dans un premier sens de rotation lors de la fermeture de l'outil de coupe puis entrainé par le moteur lors de l'ouverture de l'outil de coupe.

De plus, quel que soit le mode de réalisation, le ventilateur peut être en roue libre lorsque le moteur s'arrête après une rotation.

Alternativement, le ventilateur peut ne pas être en roue libre dans au moins un sens de rotation.

Avantageusement, le ventilateur peut être aligné avec le moteur électrique dans une direction longitudinale du sécateur.

Ainsi, d'une part, la disposition du ventilateur vis-à-vis du moteur est optimisée afin de limiter l'encombrement. D'autre part, la direction du flux d'air généré par le ventilateur est optimisée de sorte que le flux d'air est dirigé vers l'ensemble du moteur dans une plus large mesure. De préférence, le flux d'air généré par le ventilateur est axial et non radial.

Ainsi, dans ce mode de réalisation, lorsque le ventilateur est monté rotatif dans un sens de rotation, le flux d'air sera tiré depuis le moteur, ou poussé vers le moteur. Lorsque le ventilateur est monté rotatif dans les deux sens de rotation, alors le flux sera tiré depuis le moteur dans un sens de rotation et poussé vers le moteur dans l'autre sens de rotation.

Par exemple, le ventilateur peut être disposé dans l'alignement du moteur, d'un côté du moteur opposé à celui de l'outil de coupe.

Préférentiellement, le ventilateur peut être disposé de sorte à laisser un espace entre ledit ventilateur et le moteur électrique, permettant ainsi de laisser passer le flux d'air qu'il génère. En effet, dans ce cas, un espace est formé entre le ventilateur et le moteur permettant une entrée, respectivement une sortie d'air, dans une direction radiale, entre le ventilateur et le moteur électrique.

Avantageusement, le ventilateur peut être monté directement sur l'arbre moteur.

Cela permet de minimiser les pertes liées à la transmission entre le moteur et le ventilateur qui peuvent être dues à des pièces de transmission intermédiaires. De plus, la transmission entre le moteur et le ventilateur, et donc l'architecture du sécateur, sont simplifiées.

Préférentiellement, le ventilateur peut être centré sur l'arbre moteur.

Suivant un mode de réalisation, le sécateur peut comprendre un carter, dit carter de ventilateur, dédié au ventilateur et disposé autour d'au moins une partie dudit ventilateur.

Le carter permet de former un élément de protection entre le ventilateur et au moins un élément interne au sécateur se trouvant à proximité dudit ventilateur, tel que par exemples des câbles reliés au moteur électrique. Le carter peut être prévu pour d'autres fonctions que celle indiquées en fonction de l'agencement du moteur électrique et de l'architecture du sécateur.

Avantageusement, le carter peut comprendre au moins une ouverture dans la direction radiale permettant entrée/sortie d'air entre le ventilateur et le moteur.

Suivant une première alternative, le ventilateur peut d'abord être assemblé avec le carter de ventilateur, puis l'ensemble monté avec le moteur. Cette alternative permet, de faciliter la manipulation du ventilateur, en particulier lors de l'assemblage du sécateur. Dans ce cas, l'ensemble ventilateur et carter peut par exemple se présenter sous la forme d'un bloc indépendant.

Suivant une autre alternative, le carter de ventilateur et le ventilateur peuvent être assemblés dans le sécateur indépendamment l'un de l'autre, en assemblant d'abord le carter puis le ventilateur, ou *vice versa.*

Avantageusement, le carter de ventilateur peut comporter un moyen d'attache au moteur électrique.

Cela permet de simplifier l'architecture du sécateur et de ne pas avoir à prévoir d'éléments de fixation additionnels pour le carter.

Suivant un mode de réalisation, le ventilateur peut être monté sur le carter.

Dans ce cas, le ventilateur peut être entrainé par un moteur dédié.

Alternativement, toujours dans ce cas, le ventilateur peut être entrainé par le moteur électrique du ventilateur. Pour ce faire, le ventilateur peut être monté sur le carter et venir se coupler avec l'arbre moteur du moteur électrique du sécateur lorsque l'ensemble carter et ventilateur est monté dans le sécateur, et en particulier sur le moteur.

Avantageusement, le carter de ventilateur peut comprendre un moyen de maintien d'au moins un fil électrique relié au moteur électrique, hors de portée du ventilateur.

Cela permet d'éviter d'abimer ce fil lors de la rotation du ventilateur.

Un tel moyen de maintien peut comprendre au moins une ouverture de passage dudit fil hors du moteur électrique en amont du ventilateur, ou encore une rainure dans lequel le fil électrique peut être disposé, etc.

Le moyen de maintien d'au moins un fil électrique est de préférence conçu de sorte à venir obturer le moins possible le flux d'air généré par le ventilateur.

Suivant un mode de réalisation, le diamètre du ventilateur peut être supérieur au diamètre du moteur.

Cela permet d'améliorer le flux d'air généré par le ventilateur, notamment en facilitant le déplacement de l'air autour du moteur.

Le sécateur selon l'invention peut comprendre au moins une carte électronique.

En particulier, le sécateur selon l'invention peut comprendre une unique carte électronique.

D'une part, cette caractéristique permet de simplifier l'assemblage du sécateur et d'augmenter la longévité du sécateur. En effet, par opposition à un sécateur comprenant une pluralité de cartes électroniques, une unique carte électronique permet de limiter le nombre de connexions requises lors l'assemblage et donc de limiter le nombre de points amenés à se détériorer avec le temps.

D'autre part, cela permet d'éviter d'utiliser des fils de connexion entre plusieurs cartes électriques, de tels fils pouvant constituer un risque de défaillance accrue, en particulier par rupture au niveau de leur point de contact avec les cartes électroniques.

Suivant une configuration préférée mais nullement limitative, l'unique carte électronique peut être disposée dans une direction longitudinale du sécateur, adjacente au ventilateur et au moteur électrique.

Cet aspect de l'invention permet à la carte électronique d'être disposée à proximité de chacun de ces organes auxquels elle doit être connectée.

De plus, une telle disposition de la carte permet de disposer de la ventilation amenée par le ventilateur ce qui permet de refroidir en même temps ladite carte électronique.

Le sécateur selon l'invention peut avantageusement comprendre au moins deux évents, aménagés sur sa coque externe, prévus pour laisser passer l'air vers le ventilateur.

Ces évents, ou trous d'aération, permettent d'augmenter le flux d'air pénétrant à l'intérieur du sécateur, ce qui permet d'améliorer le refroidissement du sécateur.

Suivant un exemple de réalisation, au moins deux évents peuvent être disposés de part et d'autre du ventilateur, dans la direction du flux d'air généré par le ventilateur, l'un servant de prise d'air frais à l'intérieur de la coque du sécateur et l'autre servant à évacuer l'air chaud vers l'extérieur de la coque.

Avantageusement, au moins un évent peut être disposé sur une partie distale du sécateur, comportant l'outil de coupe.

Alternativement, ou en plus, au moins un évent peut être disposé sur une partie proximale du sécateur, comme étant une partie opposée à la partie distale dans la direction longitudinale.

Cette disposition permet un meilleur fonctionnement du sécateur. En effet, les évents ainsi disposés risquent moins d'être obturés lorsque le sécateur est tenu par l'opérateur, qu'il soit droitier ou gaucher.

### Description des figures et modes de réalisation

D'autres avantages et caractéristiques apparaîtront à l'examen de la description détaillée d'un mode de réalisation nullement limitatif, et des dessins annexés sur lesquels
- les FIGURES 1a et 1b sont des représentations très schématiques d'un exemple de réalisation non limitatif d'un sécateur selon l'invention ;
- la FIGURE 2 est une représentation schématique d'un exemple de réalisation non limitatif d'un moteur pouvant être utilisé dans un sécateur selon l'invention ;
- la FIGURE 3 est une représentation schématique d'un exemple de réalisation non limitatif d'un moteur équipé d'un ventilateur dans un sécateur selon l'invention;
- la FIGURE 4 est une représentation schématique d'un autre exemple de réalisation non limitatif d'un moteur équipé d'un ventilateur dans un sécateur selon l'invention ;
- la FIGURE 5 est une représentation schématique partielle d'un exemple de réalisation non limitatif d'un sécateur selon l'invention ; et
- la FIGURE 6 est une représentation schématique partielle d'un exemple de réalisation non limitatif d'un sécateur selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

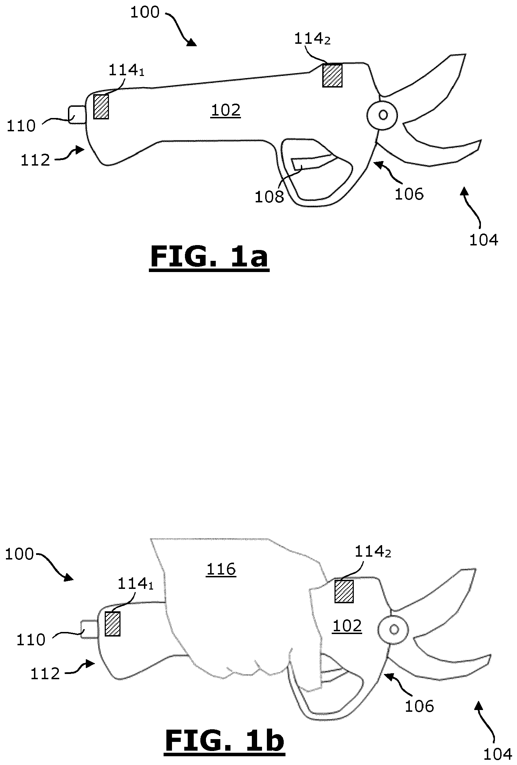

Les FIGURES 1a et 1b sont des représentations très schématiques d'un exemple de réalisation non limitatif d'un sécateur selon l'invention.

Le sécateur électrique 100 est représenté sur les FIGURE la seul et sur la FIGURE 1b tenue dans la main d'un utilisateur.

Le sécateur électrique 100, représenté sur les FIGURES la et 1b, comprends un corps 102 longitudinal. Le corps 102 comporte une coque délimitant un espace dans lequel se trouve généralement un moteur électrique, un mécanisme de transmission de mouvement, et éventuellement une carte électronique.

Le sécateur 100 comprend un outil de coupe 104 positionné à une extrémité 106, dite distale, du corps 102 du sécateur 100. Dans l'exemple représenté, l'outil de coupe 104 comprend une lame mobile et une contre-lame fixe. Alternativement, l'outil de coupe peut comprendre deux lames mobiles.

Le sécateur 100 comprend par ailleurs une gâchette 108 permettant de commander le moteur électrique du sécateur pour actionner l'outil de coupe 104.

Dans l'exemple représenté, le sécateur 100 comporte en outre un connecteur électrique 110 prévu à l'extrémité 112, dite proximale, du corps 102 du sécateur. Ce connecteur 110 permet d'alimenter le sécateur 100 en électricité depuis une source électrique externe, telle qu'une batterie déportée portée par l'utilisateur.

Alternativement, le sécateur peut comprendre une batterie intégrée, non amovible, rechargée par le connecteur 110.

Suivant encore une autre alternative, le sécateur peut comprendre une batterie amovible rechargée grâce à un chargeur externe. Dans ce cas, le sécateur peut ne pas comprendre de connecteur électrique.

Dans l'exemple représenté, la coque du corps 102 du sécateur 100 comporte en outre deux évents 114. Ces évents 144, ou trous d'aération, permettent d'une part une admission d'air frais dans le corps du sécateur 100, et une extraction d'air chaud hors du corps du sécateur. Ainsi, les vents 144 permettent d'augmenter le flux d'air pénétrant à l'intérieur du sécateur, ce qui permet d'améliorer le refroidissement du sécateur.

Un premier évent 114₁ est disposé sur une partie proximale du corps 102, à proximité du connecteur électrique 110. Un deuxième évent 114₂ est disposé sur une partie distale du corps 102, à proximité de l'outil de coupe 104.

Alternativement, les évents 114 peuvent être situés sur une même partie proximale ou distale de la coque du sécateur 100.

Selon une variante de réalisation la coque du corps 102 du sécateur 100 peut comprendre un plus grand nombre d'évents 114.

Comme montré sur la FIGURE 1b, un utilisateur souhaitant utiliser le sécateur 100, le saisit par le corps 102.

Les évents 112 du sécateur 100 sont disposés de sorte qu'ils ne sont pas obstrués par la main 116 de l'utilisateur tenant le sécateur 100.

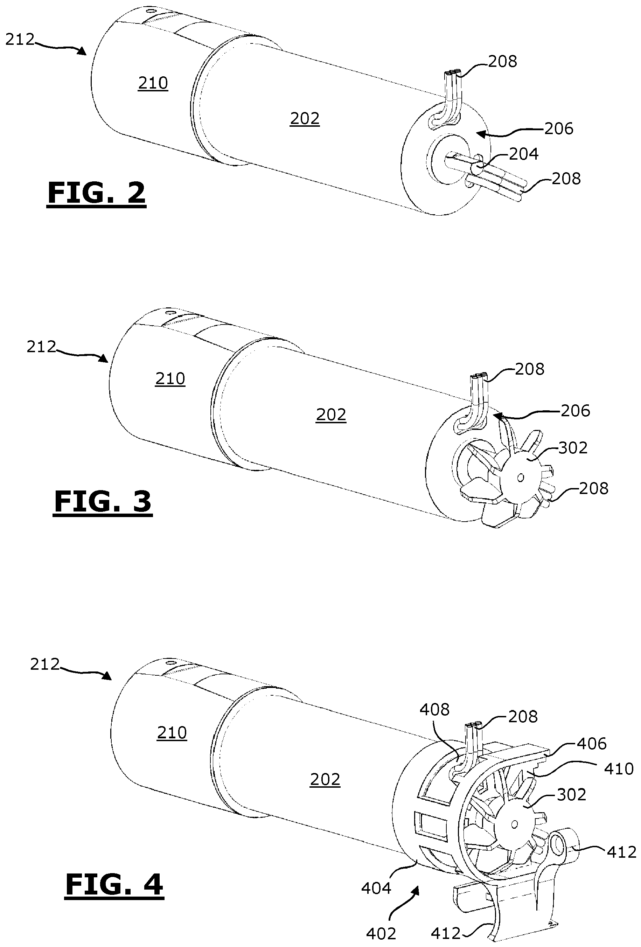

La FIGURE 2 est une représentation schématique d'un exemple de réalisation non limitatif d'un moteur pouvant être utilisé dans un sécateur selon l'invention.

Le moteur 202, représenté sur la FIGURE 2, est un moteur électrique, tel que par exemple un moteur dit « sans balais » ou « brushless ». Ce moteur 202 a pour fonction première de permettre l'actionnement de l'outil de coupe.

Le moteur 202 comprend un arbre moteur 204 qui fait saillie du moteur au niveau d'une extrémité proximale 206 dudit moteur.

Le moteur 202 comprend en outre des fils électrique 208 permettant de l'alimenter, et éventuellement de le contrôler. Dans l'exemple représenté, les fils électriques sortent du moteur 202 au niveau de son extrémité proximale 206.

Le moteur 202 représenté sur la FIGURE 2 présente une section circulaire ou arrondie. Bien entendu, le moteur peut présenter une section de forme différente selon des alternatives non représentées.

Éventuellement, le moteur peut être couplé à un réducteur 210, disposé du côté de son extrémité distale 212, opposée à l'extrémité proximale 206, dans la direction longitudinale du moteur 202.

La FIGURE 3 est une représentation schématique d'un exemple de réalisation non limitatif d'un moteur équipé d'un ventilateur dans un sécateur selon l'invention.

Le moteur 202 est le moteur 202 de la FIGURE 2.

Sur la FIGURE 3, le moteur est équipé d'un ventilateur 302 directement monté sur l'arbre moteur 204 du côté de l'extrémité proximale 206.

Le ventilateur 302 ainsi placé est entrainé par le moteur 202 lorsqu'il est mis en mouvement pour actionner l'outil de coupe.

Le ventilateur 302 étant directement monté sur l'arbre moteur 204, il est entrainé en rotation dans les deux sens de rotation. Alternativement, le ventilateur 302 peut être relié par un élément intermédiaire, pouvant par exemple permettre au ventilateur 302 d'être entrainé par le moteur 202 dans un unique sens de rotation.

Dans l'exemple représenté, le diamètre du ventilateur 302 est inférieur au diamètre du moteur 202. Alternativement le diamètre du ventilateur 302 peut être égal voire supérieur au diamètre du moteur 202.

La FIGURE 4 est une représentation schématique d'un autre exemple de réalisation non limitatif d'un moteur équipé d'un ventilateur dans un sécateur selon l'invention.

Le moteur 202 est le moteur 202 de la FIGURE 2.

La FIGURE 4 comprend tous les éléments représentés sur la FIGURE 3.

De plus, sur la FIGURE 4, un carter 402 est monté sur le moteur 202 grâce à un moyen d'attache 404. Ce moyen d'attache 404 est dimensionné de sorte à pouvoir recevoir l'extrémité proximale 206 du moteur 202 et maintenir ledit carter 402 solidaire dudit moteur 202.

Dans l'exemple représenté, le moyen d'attache 404 se présente sous une forme annulaire encerclant, ou enveloppant, l'extrémité distale 206 du moteur 202, de manière serrée. Ainsi, le carter 402, une fois monté sur le moteur 202, est ainsi maintenu sur celui-ci par friction entre l'enveloppe externe du moteur 202 le moyen d'attache 404.

Le carter 402 comprend en son centre une ouverture, dans le sens longitudinal, laissant passer l'arbre moteur 204 quand le carter est monté sur l'extrémité distale 206 du moteur 202.

Le carter 402 comprend en outre, d'un côté opposé au moyen d'attache 404, une lèvre 406 venant accueillir le ventilateur 302. Cette lèvre 406 permet de protéger le ventilateur dans une direction radiale. Cette lèvre 406 facilite aussi le centrage du ventilateur et donc son montage sur l'arbre moteur 204. La lèvre 406 illustrée en FIGURE 4 n'entoure que partiellement le ventilateur 302, afin de laisser place une carte électronique. Il est toutefois possible, selon une variante de réalisation, que cette lèvre 406 vienne entourer intégralement le ventilateur 302, formant ainsi une couronne.

Le carter 402 comprend en outre des ouvertures 408 de passage de fils 208 connectés au moteur 202. Alternativement le carter 402 peut comprendre des rainures dans lesquelles les fils électriques peuvent être disposés.

Le carter 402 comprend en outre aussi une paroi 410, parallèle au plan du ventilateur 302, située entre le ventilateur 302 et les ouvertures 408. Cette paroi permet entre autre de maintenir hors de porter les fils 208 du ventilateur 302. Cette paroi 410 présente toutefois des ouvertures permettant de laisser passer au moins en partie le flux d'air généré par le ventilateur.

Le carter 402 peut en outre comporter des éléments de fixation 412, permettant d'attacher divers autres éléments du sécateur (non illustrés) au carter 402.

Le carter 402 est par exemple en une matière plastique.

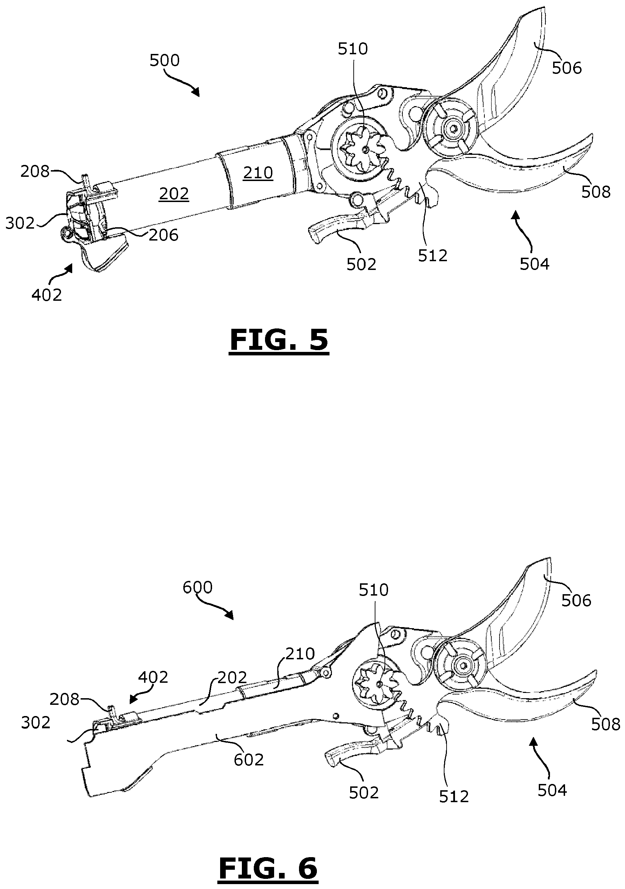

La FIGURE 5 est une représentation schématique partielle d'un exemple de réalisation non limitatif d'un sécateur selon l'invention.

Le sécateur 500 illustré sur la FIGURE 5 comprend tous les éléments représentés en FIGURE 4.

Le sécateur 500 comprend en outre une gâchette 502, et un outil de coupe 504 comprenant une lame mobile 506 et une contre lame 508 fixe.

Le réducteur 210 est entre le moteur 202 et l'outil de coupe 506 dans la direction longitudinale du sécateur 500. Le sécateur 500 peut en outre comprendre un mécanisme de transmission de mouvement du réducteur 210 à la lame mobile, permettant ainsi le déplacement de la lame mobile 508 quand le moteur 202 est activé par la gâchette 504. Le mécanisme de transmission comprend une roue dentée 510 en prise avec crémaillère 512 prévu sur la lame mobile.

La FIGURE 6 est une représentation schématique partielle d'un exemple de réalisation non limitatif d'un sécateur selon l'invention.

Le sécateur 600 comprend l'intégralité des éléments du sécateur 500 de la FIGURES 5.

La sécateur 600 comprend en outre une unique carte électronique 602. Cette unique carte électronique 602 est disposée dans une direction longitudinale du sécateur 600.

Dans l'exemple représenté, la carte électronique 602 est disposée dans de manière parallèle avec le plan dans lequel se déplace la lame mobile 508.

Dans l'exemple représenté, la carte électronique se présente sous une forme longitudinale, se prolongeant dans la direction longitudinale du sécateur. Ainsi, la carte électronique 602 longe le ventilateur 302, le carter 402, le moteur 202 et le réducteur 210. Dans l'exemple représenté la carte électronique se prolonge autour de la roue dentée 512.

Bien entendu, l'invention n'est pas limitée aux exemples détaillés ci-dessus.

## Revendications

1. Sécateur (100;500;600) motorisé électroportatif comprenant :
- un outil de coupe (104;504); et
- un moteur électrique (202) pour actionner ledit outil de coupe (104;504) ;
**caractérisé en ce qu'**il comprend un ventilateur (302) agencé pour refroidir ledit moteur électrique (202).

2. Sécateur (100;500;600) selon la revendication précédente, **caractérisé en ce que** le ventilateur (302) est entrainé par le moteur électrique (202) dudit sécateur (100;500;600) dans au moins un sens de rotation.

3. Sécateur (100;500;600) selon l'une quelconque des revendications précédentes, **caractérisé en ce que** le ventilateur (302) est entrainé par ledit moteur électrique (202) dans les deux sens de rotation.

4. Sécateur (100;500;600) selon l'une quelconque des revendications précédentes, **caractérisé en ce que** le ventilateur (302) est solidaire en rotation d'un arbre moteur (204) du moteur électrique (202), de sorte qu'il s'arrête lorsque ledit arbre moteur (204) s'arrête.

5. Sécateur (100;500;600) selon l'une quelconque des revendications précédentes, **caractérisé en ce que** le ventilateur (302) est aligné avec le moteur électrique (202) dans une direction longitudinale du sécateur (100;500;600).

6. Sécateur (100;500;600) selon l'une quelconque des revendications précédentes, **caractérisé en ce que** le ventilateur (302) est monté directement sur l'arbre moteur (204).

7. Sécateur (100;500;600) selon l'une quelconque des revendications précédentes, **caractérisé en ce que** le sécateur comprend un carter (402), dit carter de ventilateur, dédié au ventilateur (302) et disposé autour d'au moins une partie dudit ventilateur (302).

8. Sécateur (100;500;600) selon la revendication précédente, **caractérisé en ce que** le carter de ventilateur (402) comporte un moyen d'attache (404) au moteur électrique (202).

9. Sécateur (100;500;600) selon l'une quelconque des revendications 6 à 8, **caractérisé en ce que** le carter de ventilateur (402) comprend un moyen de maintien (408) d'au moins un fil électrique (208) relié au moteur électrique (202) hors de portée du ventilateur (302).

10. Sécateur (100;500;600) selon l'une quelconque des revendications précédentes, **caractérisé en ce que** le diamètre du ventilateur (302) est supérieur au diamètre du moteur (202).

11. Sécateur (600) selon l'une quelconque des revendications précédentes, **caractérisé en ce que** le sécateur (600) comprend une unique carte électronique (602).

12. Sécateur (600) selon la revendication précédente, **caractérisé en ce que** l'unique carte électronique (602) est disposée dans une direction longitudinale du sécateur (600), adjacente au ventilateur (302) et au moteur électrique (202).

13. Sécateur (100) selon l'une quelconque des revendications précédentes, **caractérisé en ce que** le sécateur comprend au moins deux évents (114), aménagés sur sa coque externe, prévus pour laisser passer l'air vers le ventilateur (302).

14. Sécateur (100) selon la revendication précédente, **caractérisé en ce que** :
- au moins un évent (114) est disposé sur une partie distale (106) du sécateur (100) comportant l'outil de coupe (104), et/ou
- au moins un évent (114) est disposé sur une partie proximale (112), opposée à la partie distale (106) dans une direction longitudinale du sécateur (100).
